# EUROPÄISCHE PATENTSCHRIFT

(11) **EP 0 515 882 B1**
(45) Veröffentlichungstag und Bekanntmachung des Hinweises auf die Patenterteilung: **17.01.1996**
(21) Anmeldenummer: 92107830.9
(22) Anmeldetag: 09.05.1992
(51) Int. Cl.: B21D 43/05, F16H 21/20

(54) **Einrichtung zur Änderung des Hebelverhältnisses eines zweiarmigen Schwinghebels**
Device for changing the lever-ratio of a two-armed oscillating lever
Appareil pour le changement du rapport de levier d'un levier oscillant à deux bras

(30) Priorität: 25.05.1991 DE 4117101
(43) Veröffentlichungstag der Anmeldung: 02.12.1992
(73) Patentinhaber: SCHULER PRESSEN GmbH & Co., D-73033 Göppingen (DE)
(72) Erfinder: Thudium, Karl, W-7328 Wäschenbeuren (DE); Dangelmayr, Andreas, W-7331 Ottenbach (DE); Rieger, Walter, W-7320 Göppingen (DE)

(56) Entgegenhaltungen:
- FR-A- 1 231 767
- US-A- 3 421 378

## Beschreibung

Die Erfindung betrifft eine Einrichtung zur Änderung des Hebelverhältnisses eines zweiarmigen Schwinghebels nach dem Oberbegriff des Anspruchs 1.

Derartige Einrichtungen sind bekannt. So zeigt die DE-A-959 783 eine fliegende Schere zum Unterteilen von laufendem Schneidgut, bei der die Abschnittlänge veränderbar ist bei beliebiger Geschwindigkeit des Schneidguts. Die Mitlaufgeschwindigkeit der Messer soll bei gleichbleibender Schnitt-Bewegungscharakteristik anpaßbar sein. Dies wird erreicht, indem der Antrieb eines der Messer durch eine Schubkurbel mit Gleitbahnführung erfolgt. Die Führungsteile sind in Bezug auf die treibende Kurbelwelle verstellbar, und es läßt sich für die Schubkurbel vermittels einer Spindel-Mutter-Verbindung ein neues Hebelverhältnis einstellen. Die Spindel ist gestellseitig gelagert.

Aus der EP-A-0 202 882 ist der Bewegungsantrieb für die Umsetzbewegungen in einer Presse bekannt, bei der die zuvor genannten Möglichkeiten nicht berücksichtigt wurden. Vielmehr sind die Verstellmittel für die Veränderung der Hebelverhältnisse eines Schwinghebels in diesem gelagert und müssen bei dessen Schwingbewegung bewegt werden. Hierbei sind für die Bewegung von Werkstücken durch die Arbeitsstufen der Presse je zwei Schwinghebel für jede Bewegungsachse vorgesehen. Jeder der Schwinghebel ist über eine Kurvenfolgerrolle an eine drehende Kurve gelegt, deren Profil die Schwingbewegung des Schwinghebels und somit die Hublänge in den Bewegungsachsen bestimmt. Der Abgriffspunkt für die Umsetzbewegung an jedem Schwinghebel ist vermittels einer Muttel-Spindel-Verbindung einstellbar. Die Automatisierung der Verstellung erfolgt über je einen Stellmotor in jedem der Schwinghebel.

Desweiteren ist aus der FR-A-1 231 767 ein Mechanismus mit alternierender Bewegung und einstellbarem Hub, insbesondere für Dosierpumpen, gemäß dem Oberbegriff des Anspruchs 1 bekannt. Der Mechanismus enthält eine Stütze, in der ein Läufer geführt wird, der als Anlagepunkt für einen Schwinghebel dient, der an einem Punkt durch ein Antriebsorgan mit festem Hub bewegt wird. Ausgangsseitig ist der Schwinghebel mit einem Abtriebsorgan mit variablem Weg (Hub) verbunden, wobei Stütze, der in der Stütze geführte Läufer und der Schwinghebel eine autonome Baueinheit bilden, die in eine Maschine eingesetzt ist, während der Läufer mit einem außen liegenden Punkt der Maschine verbunden ist und von hier seine Verstellung erhält zur Einstellung des variablen Weges des Antriebsorganes.

Gegenüber diesem aufgezeigten Stand der Technik ist es Aufgabe der Erfindung, den Gedanken der gestellseitigen Lagerung der Verstellmittel für die Änderung des Hebelverhältnisses eines zweiarmigem Schwinghebels, insbesondere für die Umsetzbewegungen in einer Presse zu realisieren mit einer im Betrieb starren Anordnung des Lagerpunktes des Schwinghebels.

Diese Aufgabe ist gelöst durch die Merkmale des Anspruchs 1. Die weiterbildenden Gedanken entsprechend Anspruch 2 stellen eine bevorzugte Ausgestaltung dar.

Von besonderem Vorteil ist hierbei die Möglichkeit der Änderung des Hebelverhältnisses in einer definierten Lage, z.B. der Werkzeugwechsellage. Die hierfür erforderliche Masse ist nahe dem Drehlager angeordnet. Der Schwinghebel ist in seinem Drehlager fixiert. Es kommt nur zu geringen Auslenkbewegungen in der Längsachse. Die Bewegungsvorgabe erfolgt nicht zwangläufig, z.B. vermittels Exzentertrieb, sondern kurvengesteuert. Die Einrichtung ist insgesamt ortsunabhängig im Pressengestell.

Anhand eines Ausführungsbeispiels in der Zeichnung wird im folgenden die Erfindung näher erläutert.

Dabei zeigen
- Fig. 1: den Gesamtaufbau der Einrichtung nach der Erfindung,
- Fig. 2: ein Bewegungsdiagramm für zwei mögliche Achsen innerhalb der Umsetzbewegungen in einer Presse,
- Fig. 3: eine gegenüber Fig. 1 vergrößerte Darstellung der erfindungswesentlichen Baugruppe und
- Fig. 4: eine Schnittdarstellung entsprechend dem Schnittverlauf IV-IV in Fig. 3.

In den Figuren sind gleiche Teile mit gleichen Positionszahlen versehen worden. Mit 16 ist ein Gestell, z.B. der Vorsatzblock einer insgesamt mit 1 angedeuteten Presse positioniert. In diesem Gestell 16 ist eine motorgetriebene Welle 2 gelagert. Auf der Welle 2 ist eine Kurvenscheibe 3 für eine der Umsetzbewegungen von Greiferschienen, Hubbalken odgl. Umsetzeinrichtungen in der Presse angeordnet, wobei diese Bewegungen in z.B. drei Achsen erfolgen können. Die Umsetzbewegungen sind definierbar als Öffnen-Schließen-Bewegung (1. Achse), Heben-Senken-Bewegung (2. Achse) und Transferbewegung hin und zurück (3. Achse). Von Werkstück zu Werkstück bzw. von Werkzeug zu Werkzeug unterschiedlich große Werkzeugabstände, unterschiedlich große Werkstückabmessungen, unterschiedliche Aushebe-(Zieh-)tiefen erfordern Veränderungen in den Bewegungen der Umsetzeinrichtung. Von daher ist es ggf. erforderlich, je Bewegungsachse zwei Kurvenscheiben 3, somit insgesamt vier Kurvenscheiben bei zwei Bewegungsachsen bzw. sechs Kurvenscheiben bei drei Bewegungsachsen auf der Welle 2 anzuordnen. Gegen das Profil (Außenform) der Kurvenscheibe 3 ist ein in einem gestellfesten Drehpunkt 5 schwenkbeweglich gelagerter Kurvenfolgerhebel 4 über eine Kurvenfolgerrolle 6 gelegt zum Bewegungsabgriff. Eine die Kurvenfolgerrolle 6 gegen die Außenform der Kurvenscheibe 3 pressende Hydraulik- oder Pneumatik-Druckeinheit ist nicht dargestellt worden. Diese Druckeinheit kann auch an anderer Stelle des Getriebezuges eingreifen. Die abgegriffene Bewegung wird über eine in einem Gelenkpunkt 9 an dem Kurvenfolgerhebel 4 schwenkbeweglich gelagerte Anlenkstange 8 auf einen Schwinghebel 7 übertragen, an dem diese mit dem anderen Endteil in einem weiteren Gelenkpunkt 9 gleichfalls schwenkbeweglich gelagert ist. Der Schwinghehel 7 weist in einem mittleren Bereich ein Langloch 34 auf zum Durchtritt eines Lagerbolzens 39, der in einem Kulissenstein 10 gehalten ist. Der Kulissenstein 10 ist in Führungen 13 des Schwinghehels 7 in dessen Längserstreckung 36 verschieblich. Der in seinem Querschnitt im wesentlichen doppel-T-förmige Schwinghebel 7 wird in dem bei 11 gebildeten Drehlager von einem Stützblech 12 gabelförmig umfaßt. Das Stützblech 12 ist in gestellfesten Führungen 33 bei 16 verschieblich geführt und weist einen Mutterteil 15 auf, der mit einer Spindel 14 zusammenwirkt. Die Spindel 14 ist über eine Drehgelenkwelle 18 und ein Getriebe 17 von einem Stellmittel drehbeaufschlagbar. Von dem Stellmittel ist andeutungsweise nur der Flanschbereich 37 dargestellt worden. Bei Beaufschlagung der Spindel 14 vermittels Stellmittel, das ein elektrisch, hydraulisch odgl. betriebener Motor sein kann, ist das Stützblech 12 in den Führungen 33 bewegbar und mit der Verstellbewegung des Stützbleches 12 ist die Lage des Drehlagers 11 mit Bezug auf die Gesamtlänge des Schwinghebels 7 einstellbar. Durch die Beaufschlagung der Spindel 14 ist somit das Übersetzungsverhältnis (Hebelverhältnis) des Schwinghebels 7 veränderbar. Der Bewegungsabgriff erfolgt über eine Lenkerstange 23, die in dem Drehgelenk 22 an dem Schwinghehel 7 schwenkbeweglich gelagert ist. Mit dem anderen Endteil ist die Lenkerstange 23 mit dem z.B. Umsetzgetriebe für die Bewegung der Umsetzeinrichtung für eine Bewegungsachse wirkverbunden. In dem Drehgelenk 22 ist eine Stützlasche 20 gelagert, die in dem entgegengesetzten Ende in einem gestellfesten Drehgelenk 21 ggf. über ein Konsolblech 32 bei 16 gehalten ist, sodaß der Schwinghehel 7 in dem das Drehgelenk 22 aufweisenden Endteil auf einem Kreisbogen zwanggeführt ist. Hierdurch entfallen Arretiermittel zwischen dem Schwinghehel 7 und dem Kulissenstein 10.

Der Schwinghehel 7 ist in einer Ausgangsstellung gezeigt, dessen Mittenachse ist mit 7¹ positioniert. In den beiden durch die Verstellbewegung der Spindel 14 bewirkten Lageänderungen, Änderungen des Hebelverhältnisses des Schwinghebels 7, erreichenbaren möglichen Endstellungen ist der Schwinghebel 7 nur andeutungsweise dargestellt. Der Kurvenaggriff von der Kurve 3 bewirkt generell eine Bewegung des Gelenkpunktes 9 an dem Schwinghebel 7 in die mit 7¹ angedeutete Position. Je nach Hebelverhältnis, Lage des Drehlagers 11, werden Endstellungen für das Drehgelenk 22 erreicht. Die Stellung des Schwinghebels 7 in den möglichen beiden Endstellungen ist mit 7², 7³ positioniert worden.

Bei Drehung der Kurvenscheibe 3 entgegen dem Uhrzeigersinn und dem Durchlaufen der Rast bei 38 sind die Mitten von Spindel 14 und Schwinghebel 7 zueinander parallel ausgerichtet. In dieser Stellung kann die Presse stillgesetzt werden und der Austausch des Werkzeugs oder der Werkzeugsätze erfolgen. Die parallele Ausrichtung von Spindel 14 und Schwinghehel 7 ist für die Änderung dessen Hebelverhältnisses erforderlich. Für den Parallelbetrieb von z.B. zwei Greiferschienen bzw. Hubbalken ist für jede der Bewegungsachsen , hier für das Heben und Senken, das Getriebe 17 über eine Drehwelle 19, die synchron zur Gelenkwelle 18 getrieben ist, mit einem weiteren Getriebe und über dieses mit einer zweiten, eine zweite Mutter-Spindel-Verbindung treibende Gelenkwelle wirkverbunden.

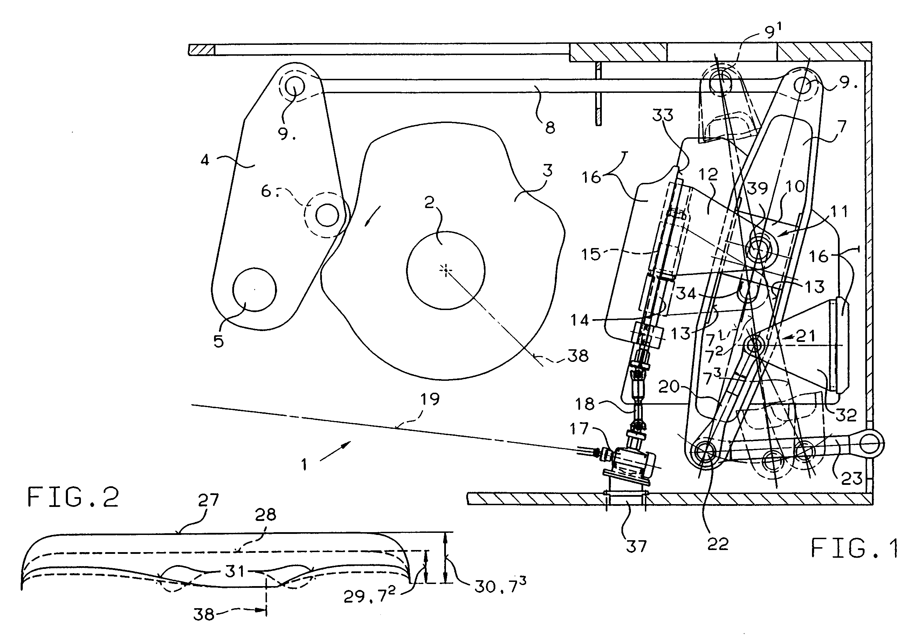

In Fig. 2 ist die Möglichkeit der Änderung des Hebelverhältnisses für die Hebe-Senk-Bewegungen als eine der möglichen Umsetzbewegungen in Bezug auf die Transferbewegung veranschaulicht. Die Umsetzbewegungen der Werkstücke in der Presse können entsprechend der Linie 27 oder entsprechend der Linie 28 erfolgen. Die durch die Kurve 3 bewirkte Hebe-Senk-Bewegungen sind mit 29 bzw. 30 veranschaulicht. Diese Bewegungen bewirken in der Umsetzbewegung 27 die Entnahme von Werkstücken aus Werkzeugen bzw. die Ablage von Werkstücken in Werkzeugen. Die geringere Hebe-Senk-Bewegung 29 wird hierbei durch die Bewegung des Schwinghebels 7 aus der Ausgangsstellung 7¹ in die Endstellung 7² bewirkt; die größere Hebe-Senk-Bewegung 30 durch die Bewegung des Schwinghebels 7 aus der Ausgangsstellung 7¹ in die mit 7³ gekennzeichnete Endstellung. Die Rückbewegung der Umsetzmittel in der Presse ist mit 31 angedeutet, in der entsprechend der Ausgestaltung des Profils der Kurve 3 gleichfalls ein Heben und Senken der Umsetzmittel in der Presse möglich ist. Die Position 38 stellt die Kurvenstellung während des Zeitraums des Stops der Presse dar.

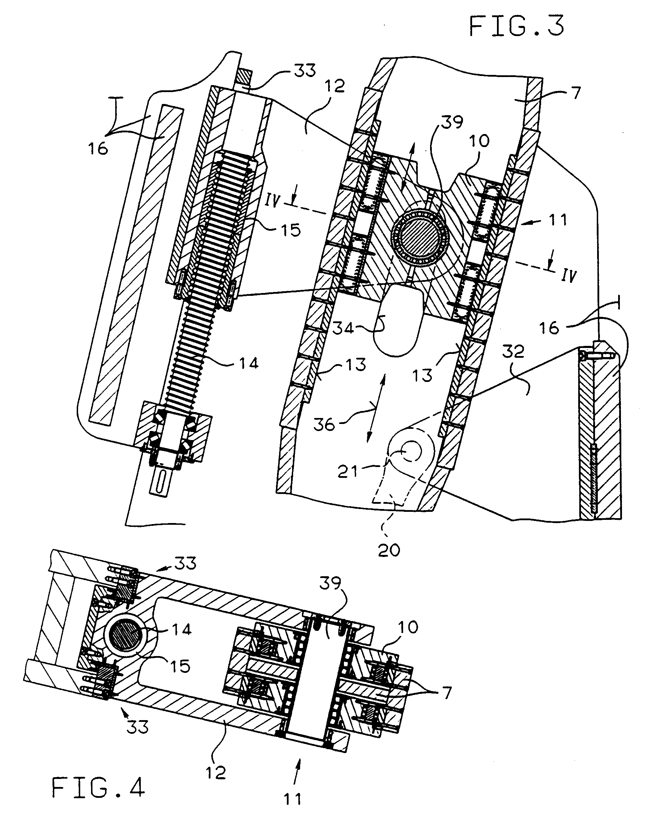

Die Fign. 3 und 4 lassen in Einzelheiten den Bereich der Mittel zur Änderung des Hebelverhältnisses des Schwinghebels 7 deutlicher erkennen. Der Kulissenstein 10 weist Lager auf, die auf den Laufflächen 13 abwälzen. Ebenso ist die Lagerung des Schwinghebels 7 über den Kulissenstein 10, den Lagerbolzen 39 und das Stützblech 12 über Wälzlager deutlicher veranschaulicht. Das Stützblech 12 dient hierbei einerseits der Aufnahme der Lagerstelle, Drehlager 11, andererseits ist das Stützblech 12 in den Führungen 33 vermittels drehgetriebener Spindel 14 verstellbar dargestellt. Die weiteren Positionszahlen verweisen auf gleiche zu Fig. 1 erläuterte Bauteile.

## Patentansprüche

1. Einrichtung zur Änderung des Hebelverhältnisses eines zweiarmigen Schwinghebels für die Umsetzbewegungen in einer Presse (1), wobei der Schwinghebel (7) über eine Stützlasche (20) abgestützt ist und die Stützlasche (20) an dem Schwinghebel (7) und an dem Gestell (16) der Presse (1) drehgelenkig gelagert ist und in einem Hebelarm anlenkbar und die Ausgangsbewegung von einem weiteren Hebelarm abgreifbar ist, mit einer Schieberführung für die Schwinglagerung des Schwinghebels in Art eines verschiebbaren Kulissensteins (10), der in seinem im wesentlichen mittleren Bereich das Drehlager (11) aufnimmt und in seinen im wesentlichen äußeren Bereichen in dem Schwinghebel (7) und in dessen Längserstreckung in Laufflächen (13) verschieblich gelagert ist sowie einem Stellmittel, Drehübertragungsmitteln und einer Mutter-Spindel-Verbindung zur Verschiebebewegung der Schieberführung relativ zum Schwinghebel, wobei der Schwinghebel (7) über die Schieberführung (10, 13) in einem Drehlager (11) einer Stütze (12) gelagert und die Stütze (12) in dem Gestell (16) verschieblich geführt ist und die Stütze (12) die Mutter (15) der Mutter-Spindel-Verbindung zum Zusammenwirken mit der Spindel (14) aufweist und das Stellmittel (37), Drehübertragungsmittel (17, 18) und Spindel (14) in dem Gestell (16) gelagert sind, **dadurch gekennzeichnet,** daß Spindel (14) und Bewegungsrichtung des Kulissensteins (10) bzw. Längserstreckung (36) des Schwinghebels (7) in einer Werkzeugwechselstellung (38) in paralleler Ausrichtung zueinander verlaufen, und die Stützlasche (20) in dem Drehgelenk (22) für den Abgriff der Umsetzbewegungen am Schwinghebel (7) gelagert ist.

2. Einrichtung nach Anspruch 1, mit zumindest zwei zweiarmigen Schwinghebeln (7) für die Umsetzbewegungen, **dadurch gekennzeichnet,** daß je Schwinghebel (7) eine Spindel (14) zur Verschiebebewegung eines Kulissensteins (10) angeordnet ist und die Spindeln (14) beider Schwinghebel (7) über Getriebe (17), Drehwellen (19), Gelenkwellen (18) und dgl. Drehbewegungsübertragungsmittel untereinander und mit einem gemeinsamen Stellmittel (37) wirkverbunden sind.

## Claims

1. Device for changing the lever ratio of a two-armed oscillating lever for the relocation movements in a press (1), wherein the oscillating lever (7) is supported by means of a support link (20) and the support link (20) is pivotally mounted on the oscillating lever (7) and on the frame (16) of the press (1) and can be articulated in one lever arm and the output movement can be taken off from another lever arm, said device comprising a slide guide for the oscillating mounting of the oscillating lever after the style of a sliding block (10) which in its substantially central region holds the pivot bearing (11) and in its substantially outer regions is mounted in the oscillating lever (7) for sliding, in the longitudinal direction of the latter, in running surfaces (13), and also comprising an adjusting means, rotation transmission means and a nut and spindle connection for the sliding movement of the slide guide relative to the oscillating lever, the oscillating lever (7) being mounted by means of the slide guide (10, 13) in a pivot bearing (11) of a support (12) and the support (12) being slidably guided in the frame (16), while the support (12) is provided with the nut (15) of the nut and spindle connection for cooperation with the spindle (14), and the adjusting means (37), the rotation transmission means (17, 18) and the spindle (14) are mounted in the frame (16), characterized in that the spindle (14) and the direction of movement of the sliding block (10) or the longitudinal direction (36) of the oscillating lever (7) in a tool change position (38) extend in parallel alignment to one another, and the support link (20) is mounted on the oscillating lever (7) in the pivot joint (22) for taking off the relocation movements.

2. Device according to Claim 1, comprising at least two two-armed oscillating levers for the relocation movements, characterized in that for each oscillating lever (7) a spindle (14) is provided for the sliding movement of a sliding block (10) and the spindles (14) of both oscillating levers (7) are operatively connected to one another and to a common adjusting means (37) by means of gear units (17), rotating shafts (19), articulated shafts (18) and like rotational movement transmission means.

## Revendications

1. Dispositif de changement du rapport de levier d'un levier oscillant à deux bras pour les mouvements de retournement dans une presse (1), dans lequel le levier oscillant (7) est monté sur une biellette de soutien (20) et la biellette de soutien (20) est articulée sur le levier oscillant (7) et sur le bâti (16) de la presse, et en appui sur un bras de levier et soumis au mouvement d'un autre bras de levier, pourvu d'un guide de tiroir pour assurer le guidage du mouvement du levier oscillant, à la manière d'un coulisseau mobile (10), qui porte le palier (11) dans sa zone centrale et qui est monté dans ses zones d'extrémité sur le levier oscillant (7) et dans des garnitures (13) d'un évidement longitudinal de ce dernier, ainsi que d'un organe de réglage de moyens de transmission du mouvement rotatif et d'une liaison axe-écrou pour assurer le déplacement axial du guide de tiroir par rapport au levier oscillant, dans lequel le levier oscillant (7) est monté par l'intermédiaire du guide de tiroir (10, 13) dans un palier (11) d'une potence (12) et la potence (12) est montée sur le support (16) et agencée pour pouvoir coulisser de façon guidée, la potence (12) et l'écrou (15) de la liaison axe-écrou étant agencés pour coopérer avec l'axe (14) et les moyens de réglage (37), les moyens de transmission de mouvement de rotation (17, 18) et l'axe (14) étant montés dans le support (16), **caractérisé en ce que** l'axe (14) et la direction du déplacement du coulisseau (10), respectivement la direction longitudinale (36) du levier oscillant (7), sont disposés parallèlement dans une position de remplacement de l'outillage (38) et la biellette de soutien (20) est articulée sur le levier oscillant (7) dans la rotule (22) pour l'accomplissement du mouvement de retournement.

2. Dispositif selon la revendication 1, avec au moins deux leviers oscillants à deux bras (7) pour accomplir les mouvements de retournement, **caractérisé en ce que** chaque levier oscillant (7) est associé à un axe (14) pour le déplacement coulissant d'un coulisseau (10) et en ce que les axes (14) des deux leviers oscillants (7) sont opérationnellement couplés par l'intermédiaire d'entraînements (17), des arbres de transmission rotatifs (19) des arbres de transmission articulés (18) ou des moyens de transmission du mouvement rotatif similaires, et d'un organe de réglage commun (37).
